# EUROPEAN PATENT APPLICATION

(11) **EP 4 335 688 A1**
(43) Date of publication of application: **13.03.2024**
(21) Application number: 23193719.4
(22) Date of filing: 28.08.2023
(51) Int. Cl.: B60L 53/62, H02J 1/10

(54) **POWER DELIVERY SYSTEM AND METHOD FOR DELIVERING POWER**

(30) Priority: 09.09.2022 NL 2032999
(71) Applicant: Ecotap B.V., 5281 RV Boxtel (NL); Legrand France, 87000 Limoges (FR)
(72) Inventor: van Heusden, Jacobus Maarten, 5611 SH Eindhoven (NL); Cuijpers, Pieter C.L., 5612 AE Eindhoven (NL)
(74) Representative: Arnold & Siedsma

(57) **Abstract**

The present application concerns a power delivery system configured for delivering a power to a load, and comprises a power delivery station and a determining unit. The power delivery station comprises a plurality of power supply units, PSUs, and a controller for controlling the plurality of PSUs. The determining unit is configured for determining a power distribution over the plurality of PSUs in dependence of a desired combined power to be outputted by the PSUs to the load. The power distribution describes how the power outputted by the power delivery station is to be distributed over the plurality of PSUs. The determining unit is configured to determine said power distribution based on a power delivery profile that describes how many PSUs of a given type of PSU should output what amount of power, in dependence of the combined power outputted by the PSUs. The controller is configured to control the PSUs based on the determined power distribution.

## Description

The present disclosure relates to a power delivery system and a method for delivering power.

While dating as far back as 1881, electric vehicles have been making a huge resurgence in recent years. In order to accommodate this development, a global network of power delivery systems will have to be realized. Already, this is putting a large strain on existing energy infrastructure and steps need to be taken to improve this equipment. Due to increasing power requirements of electric vehicles, power delivery systems with greater maximum output powers are required.

Power delivery systems are known in the art that include a single, relatively high-capacity power supply unit, PSU. PSUs do however not operate equally efficient at all output powers. For example, PSUs typically show relatively poor efficiencies at low output powers.

Power delivery systems are also known that include a plurality of PSUs. However, the Applicant has found that relatively little progress has been made so far in efficiently deploying these systems.

An object of the present disclosure is to provide a multi-PSU power delivery system that operates more efficiently.

The abovementioned objects are at least partially addressed in a power delivery system according to claim 1. According to the present disclosure, the power delivery system is configured for delivering power to a load and comprises a power delivery station and a determining unit. The power delivery station comprises a plurality of PSUs, and a controller for controlling the plurality of PSUs. The determining unit is configured for determining a power distribution over the plurality of PSUs in dependence of a desired combined power to be outputted by the PSUs to the load. The power distribution describes how the power outputted by the power delivery station is to be distributed over the plurality of PSUs. The determining unit is configured to determine the power distribution based on a power delivery profile that describes how many PSUs of a given type of PSU should output what amount of power, in dependence of the combined power outputted by the PSUs. The controller is configured to control the PSUs based on the determined power distribution.

PSUs of different types may differ in their efficiency curve and/or the maximum output power they can deliver. The efficiency curve describes the efficiency of the power delivery system as a function of the power outputted by that system. It can for example be described as the ratio between the power delivered to the load divided by the total amount of power delivered to the power delivery system from the grid or other source of electrical energy.

The PSUs can be substantially identical. In such systems, the PSUs are more interchangeable and if any one of these PSUs is somehow limited in its operation, e.g. due to damage or deterioration over lifetime, each may be considered interchangeable with the other PSUs. Identical PSUs may have substantially the same efficiency curve and substantially the same maximum output power.

The power delivery profile may show, as a function of the combined power, a plurality of operational ranges. In each operational range, the combined power outputted by the PSUs is distributed over the plurality of PSUs according to one or more modes associated with that operational range. Specifically, the Applicant found that a theoretical optimum for delivering power is either achieved or almost achieved when using a power delivery profile that shows, as a function of the combined power, at least one of the operational ranges to be described next.

For a combined power lying in the range from 0 to an efficiency power, a first operational range may exist in which a single PSU outputs the combined power. Here, it is noted that the efficiency power is the power outputted by a single PSU when it operates at maximum efficiency.

For a combined power lying in the range from the efficiency power to M times the efficiency power, a second operational range may exist that comprises a repetitive arrangement for M>=N>=2, wherein M is the total number of PSUs included in the plurality of PSUs. This repetitive arrangement comprises, for a combined power lying in the range from (N-1) times the efficiency power to (N-1) times the efficiency power plus a first threshold associated with (N-1) PSUs, a first mode at which (N-1) PSUs are outputting identical powers. This repetitive arrangement further comprises, for a combined power lying in the range from (N-1) times the efficiency power plus the threshold associated with (N-1) PSUs to N times the efficiency power, a second mode at which (N-1) PSUs are outputting the efficiency power and a single PSU is outputting power equal to the combined power minus (N-1) times the efficiency power.

For a combined power lying in the range from M times the efficiency power to M times the efficiency power plus a second threshold associated with M PSUs, a third operational range may exist in which M PSUs are outputting identical powers.

For a combined power lying in the range from M times the efficiency power plus the second threshold associated with M PSUs to M times the maximum power, a fourth operational range may exist that comprises a repetitive arrangement for 1 <=N<M-1. This repetitive arrangement may comprise, for a combined power lying in the range from N times the maximum power plus (M-N) times a first reference power associated with M-N PSUs to N times the maximum power plus (M-N) times a second reference power associated with M-N PSUs, a third mode at which N PSUs are outputting the maximum power and (M-N) PSUs are outputting identical powers.

The power delivery profile may describe which PSU should output what amount of power in dependence of the combined power outputted by the PSUs. For example, if the power delivery system comprises three identical PSUs labelled PSU1, PSU2, and PSU3, the power delivery profile could indicate that PSU1 should output 200W, PSU2 should output 150W, and PSU 3 should output 100W. In other embodiments, the determining unit does not indicate which PSU should output a particular power but rather indicates how many PSUs of a given type should output what power level. With respect to the example above, the determining unit could for instance indicate that among PSU1-PSU3 one PSU should output 200W, one PSU should output 150W, and one PSU should output 100W.

Power delivery systems may differ greatly in performance depending on their temperatures. To account for this effect, the power delivery system may further comprise a temperature measuring unit configured to measure a temperature of each PSU of the plurality of PSUs.

The measured temperature can be taken into account as the determining unit can select, prior to the power delivery station outputting the desired power to the load, among those PSUs of the plurality of PSUs that are of the same type and that are inactive, one or more PSUs for outputting power based on the temperature of those PSUs being lower than that of the remaining PSUs that are of the same type that are inactive.

The temperature can be taken into account as the determining unit can determine the power distribution such that among the PSUs that are of the same type, the PSU having the highest temperature is selected for outputting the lowest output power and/or the PSU having the lowest temperature is selected for outputting the highest output power. In this manner, the impact of nonuniform heating of the PSUs can be mitigated.

The determining unit can be incorporated in the power delivery station. This provides for generally more robust communication between the controller and the determining unit. Alternatively, the determining unit can be incorporated in a server remote from the power delivery station, wherein the server and power delivery station are configured to be communicatively coupled for exchanging the determined power distribution. This generally allows for more easily updating the power profile, or other aspects of the power delivery station, if necessary.

To ensure that an appropriate amount of power is delivered to the load, the power delivery system may further comprise a communication unit for receiving a value of the desired power, and for communicating the received value to the determining unit, wherein the communication unit is preferably incorporated in the power delivery station.

The determining unit may comprise a processing unit and a memory operatively coupled to the processing unit, wherein the memory stores instructions and/or values that implement the power delivery profile. The processing unit and the controller can be implemented in a single entity, such as a single controller.

The memory may store a lookup table that lists, for each PSU type, how many PSUs of that type should output what amount of power, as a function of the combined power to be outputted by the PSUs to the load. Alternatively, the memory may store a lookup table that lists which PSUs should output what amount of power, as a function of the combined power to be outputted by the PSUs to the load. Alternatively, the processing unit can be configured to determine for each PSU type, how many PSUs of that type should output what amount of power, as a function of the combined power to be outputted by the PSUs to the load by executing the instructions stored in the memory.

The power delivery station may comprise an output unit, for example a plug or a socket, wherein the power delivery system is configured to deliver the desired power to the load via the output unit. Preferably, the power delivery system can be a charging system configured to charge, through the output unit, one or more batteries, for example as included in an electronic vehicle, such as an electric car. Use of the power profile as described above in this field is particularly advantageous as different types of batteries, electronic vehicles, or electric cars can all act as different loads, and sometimes the individual batteries, electronic vehicles, or electric cars act as loads that vary over time for example during charging thereof.

According to a further aspect of the present disclosure, at least some of the abovementioned objects are also at least partially achieved in a method for delivering power to a load using a plurality of power supply units, PSUs, according to the appended claims. This method comprises determining a power distribution over the plurality of PSUs in dependence of a desired power to be outputted by the power delivery station to the load. The power distribution describes how the power outputted by the power delivery station is to be distributed over the plurality of PSUs. Determining the power distribution comprises determining the power distribution based on a power delivery profile that describes how many PSUs of a given type of PSU should output what amount of power in dependence of the combined power outputted by the PSUs. The method further comprises the step of controlling the PSUs based on the determined power distribution.

The power delivery profile may show, as a function of the combined power, a plurality of operational ranges, and wherein, in each operational range, the combined power outputted by the PSUs is distributed over the plurality of PSUs according to one or more modes associated with the operational range. Specifically, the Applicant found that a theoretical optimum is either achieved or almost achieved when using a power delivery profile that shows, as a function of the combined power, at least one of the operational ranges to be described next. For a combined power lying in the range from 0 to the efficiency power, a first operational range may exist in which a single PSU outputs the combined power. For a combined power lying in the range from the efficiency power to M times the efficiency power, wherein M is the total number of PSUs included in the plurality of PSUs, a second operational range may exist that comprises a repetitive arrangement for M>=N>=2. This repetitive arrangement comprises for a combined power lying in the range from (N-1) times the efficiency power to (N-1) times the efficiency power plus a first threshold associated with (N-1) PSUs, a first mode at which (N-1) PSUs are outputting identical powers. The repetitive arrangement may further comprise for a combined power lying in the range from (N-1) times the efficiency power plus a threshold associated with (N-1) PSUs to N times the efficiency power, a second mode at which (N-1) PSUs are outputting the efficiency power and a single PSU is outputting power equal to the combined power minus (N-1) times the efficiency power.

A third operational range may exist for a combined power lying in the range from M times the efficiency power to M times the efficiency power plus a second threshold associated with M PSUs. In this operational range, M PSUs are outputting identical powers.

A fourth operational range may exist for a combined power lying in the range from M times the efficiency power plus the second threshold associated with M PSUs to M times the maximum power. This operational range comprises a repetitive arrangement for 1<=N<M-1. This repetitive arrangement comprises, for a combined power lying in the range from N times the maximum power plus (M-N) times a first reference power associated with M-N PSUs to N times the maximum power plus (M-N) times a second reference power associated with M-N PSUs, a third mode at which N PSUs are outputting the maximum power and (M-N) PSUs are outputting identical powers.

The abovementioned methods are particularly advantageous in embodiments wherein the PSUs have substantially the same efficiency curve and the same maximum power delivery capacity.

Next, the present invention will be described in more detail by referring to the appended drawings, wherein:
Figure 1 shows an exemplary efficiency curve for a single exemplary PSU;
Figure 2 shows, for a three-PSU power delivery system according to the present disclosure, the power outputted by each PSU as a function of the combined output power;
Figure 3 shows, for the three-PSU power delivery system of figure 2, a theoretical optimal behaviour of the system indicating the output power for each of the three PSUs;
Figure 4 shows the difference between the effective power supplied by the power delivery system according to the present disclosure behaving as shown in figure 2 and the effective power supplied by the theoretical optimal system behaving as shown in figure 3; and
Figure 5 shows an exemplary embodiment of a power delivery station according to the present disclosure.

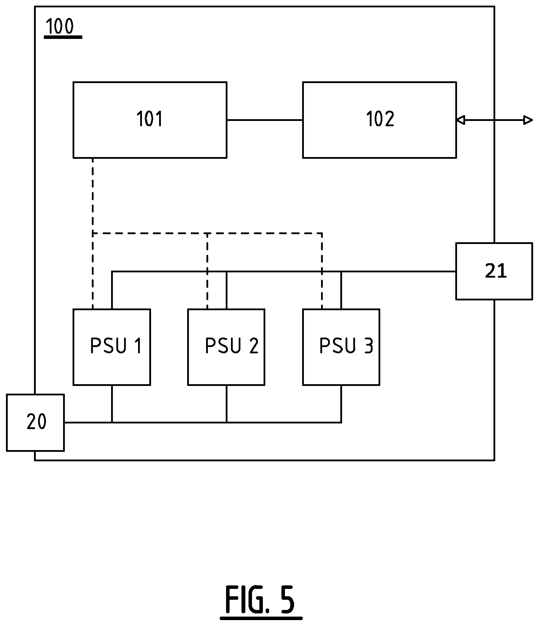

Operation of a power delivery system, configured for delivering power to a load, according to the present disclosure will now be explained in further detail. An exemplary embodiment comprises a power delivery station 100 as shown in figure 5, and a determining unit at least partially implemented by controller 101. The skilled person will appreciate that systems can also be conceived in which the determining unit is not included in the power delivery station, but, for example, may form part of an external server.

In figure 5, it is shown that power delivery station 100 includes three identical power supply units PSU 1, PSU 2, PSU 3. Other embodiments may include other pluralities of power supply units. In the embodiment shown in figure 5, each power supply unit can provide a maximum output power of 30 kilowatts. Power supply units with other maximum power supply capacities may be included as well.

Controller 101 is configured to determine a power distribution over the plurality of PSUs in dependence of a desired power to be outputted by the power delivery station to the load and to control PSU1, PSU2, and PSU3 based on the determined power distribution.

In this embodiment, the desired power may be received as a request for delivering an amount of power through communication unit 102. For example, the load to which the power is to be delivered communicates the desired power to communication unit 102. In other embodiments, the power delivery system can be made aware of the desired power to be delivered in other ways. The system, or, more specifically the determining unit may for example be pre-programmed to deliver varying predefined amounts of power over time.

The power distribution describes how the power outputted by the power delivery station is to be distributed over the plurality of PSUs. Put differently, when describing the desired power as a particular load, the power distribution may be said to describe how much load each of the PSUs from the plurality of PSUs takes on.

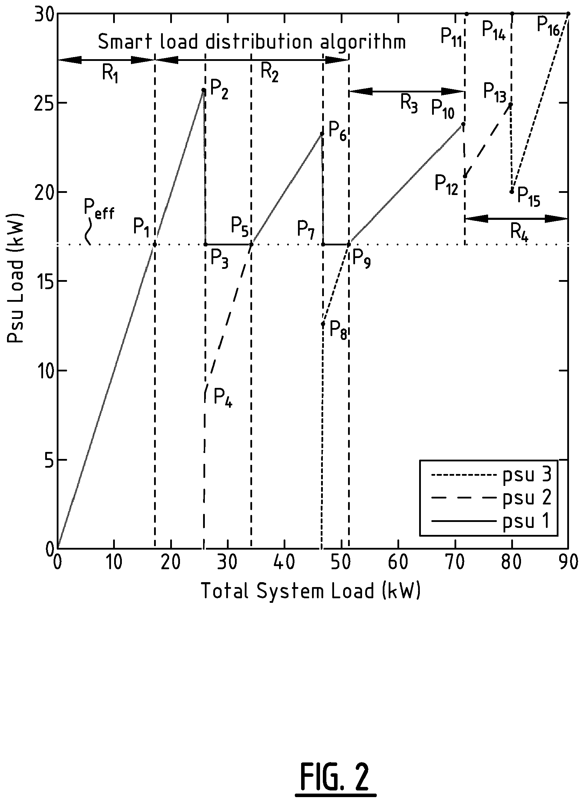

In this embodiment, controller 101, but generally, the determining unit, may be configured to determine the power distribution based on a power delivery profile that describes how many PSUs of a given type of PSU should output what amount of power, in dependence of the combined power outputted by the PSUs. The power delivery profile will be described in further detail later in relation to figure 2.

Power delivery station 100 may further comprises a memory (not shown) in which the power delivery profile is stored. The profile may for example come in the form of a look-up table. An example of such a look-up table is given in table 1. A look-up table may store absolute values, as shown in table one, or relative values which the controller can relate to a maximum power of the system as a whole or to maximum power of the individual power supply units. Values in table 1 are merely exemplary.

**Table 1: Example of look-up table**

| Total system load | Load PSU 1 | Load PSU 2 | Load PSU 3 |
|---|---|---|---|
| 10 | 10 | 0 | 0 |
| 30 | 17 | 13 | 0 |
| 50 | 17 | 17 | 16 |
| 85 | 30 | 30 | 25 |

In an alternative embodiment, the power profile may take on the form of a plurality of setpoints (e.g. any one of P1-P16), indicating upper and/or lower limits of the operational ranges R1-R4 (as explained later in relation to figure 2), and, for each of the operational ranges, an indication of how the power should be distributed over the PSUs.

For example, if the desired power lies between P9 and P10, controller 101 may determine that the desired power lies in the third operational range, and that the desired power should be distributed over all three PSUs equally.

Other embodiments are conceivable in which an external entity, such as a server, or the electronic device requesting the power via communication unit 102, provides station 100 with such a power delivery profile for the desired power.

Power delivery station 100 may optionally further comprise an input unit 20 configured for receiving power and an output unit 21 configured for supplying power.

The power supply units may for example be power converters configured to convert three-phase alternating current, e.g. grid power, to a direct current. Power delivery station 100 may be a charger, such as a direct current, DC, fast charger.

In some embodiments, the PSUs may be batteries configured to provide power through internal chemical reaction. Other implementations of the PSUs may also be possible.

Power delivery station 100 may comprise multiple output units 20 and associate each output unit with a different desired amount of power to be delivered therethrough.

In this embodiment, the PSUs are arranged in parallel, but in different embodiments the PSUs may be arranged in series as well. The skilled person will be aware of what types of PSUs can be (or have to be) arranged in what ways.

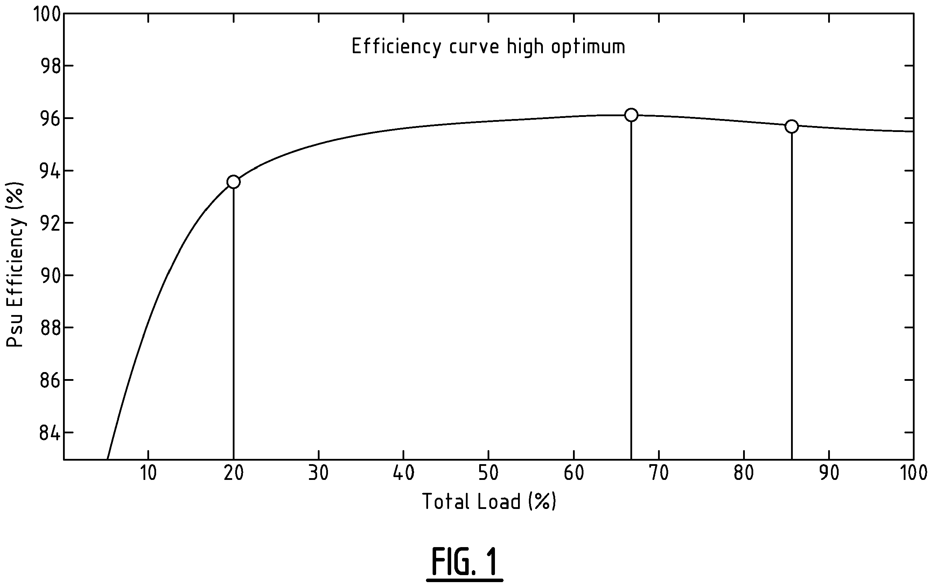

Figure 1 shows an efficiency curve of any one of PSU 1, PSU 2, or PSU3. On the X-axis, figure 1 shows the total load for the PSU and on the Y-axis figure 1 shows the efficiency of this PSU. The skilled person will appreciate that the load of the PSU can also be described as a desired power delivered by said PSU. Since the efficiency of the PSU is not 100%, the effective power supplied by the PSU is actually lower than the load. Specifically, the effective power is approximately equal to the load of the PSU times the efficiency. In the context of this application, the phrasing "taking on a load" and "supplying a power" may be considered synonymous.

Three points are indicated specifically, E1-E3. At E1, the PSU is at about 20% of its total load, also referred to as maximum power, in which case it will supply power at about 93.5% efficiency. Between E1 and E2, as can be seen from figure 1, the efficiency of the PSU increases. At E2, the PSU is at about 67% of its total load, in which case it will supply power at about 96% efficiency. This is the maximum efficiency achieved by this PSU. In the context of this application, the power supplied by a PSU when operating at its maximum power is referred to as the efficiency power. Between E2 and E3, as can be seen from figure 1, the efficiency of the PSU decreases. At E3, the PSU is at about 86% of its total load, and it does this at about 95.5% efficiency.

Figure 2 shows load levels and/or power levels for each of these three PSUs. On the X-axis, figure 2 shows the load of the complete power delivery system, i.e. the power outputted by the system, according to the present disclosure in kilowatts, and on the Y-axis figure 2 shows the load of individual PSUs included in the system in kilowatts. Also indicated, as a horizontal line, is the efficiency power P_{eff}, i.e. the load at which the PSU supplies at its maximum efficiency. For this embodiment, the efficiency power is about 17 kilowatts. For other embodiments, the efficiency power may have a different value. And, while in this embodiment the efficiency power is the same for each PSU, it may vary at least somewhat for other embodiments and in practical implementations of a system according to the embodiment.

Figure 2 shows, for each PSU in the abovementioned exemplary embodiment, the amount of load they each take on with a particular total system load. The algorithm referred to by the title of the graph in figure 2 may refer to an implementation of the power delivery profile according to the invention.

A first operational range R1 runs from zero total system load to load at point P1, which corresponds to the efficiency power. Due to low PSU performance at low PSU loads, as can be seen in the efficiency curve of figure 1, it is advantageous for low total system loads (e.g. below the efficiency power) to activate only a single PSU. This is done in this first operational range.

Between zero and P1, the load taken on by the first PSU increases one on one with the total system load.

A second operational range R2 runs from P1 to point P9, which corresponds to three times the efficiency power. Due to low PSU performance at low PSU loads, the applicant finds that it may be advantageous to distribute load among PSUs that are already active, beyond their efficiency power, before activating a further PSU, and redistributing excess loads (e.g. a load that a PSU takes on above their efficiency power) to the newly turned-on PSU, so to avoid said newly turned-on PSU to operate in its low load / low performance region. This is done in this second operational range.

Between P1 and point P2, which corresponds to the efficiency power plus threshold th_1_1, the load taken on by the first PSU increases one on one with the total system load.

At P2 and point P3/point P4, a second PSU is activated. P2 corresponds to the efficiency power plus threshold th 1_1, e.g. a first threshold associated with one PSU. Between P3 and point P5, the load taken on by the first PSU remains constant. At point P4, the second PSU is activated and takes on a load equal to threshold th_1_1. Between P4 and P5, the second PSU takes on the remaining load (e.g. the total system load minus the efficiency power), which increases one on one with the total system load. At point P5, the first and second PSU both operate at efficiency power.

Between P5 and point P6, the loads taken on by the first and the second PSUs, so two PSUs in total, both increase with half the total system load. In this range, the total system load is equally distributed over two PSUs. P6 corresponds to twice the efficiency power plus threshold th_1_2, e.g. a first threshold associated with two PSUs.

Between P7 and P9, the load taken on by the first and the second PSU remains constant. At point P8, the third PSU is activated and takes on a load equal to the threshold th_1_2, which in figure 2 corresponds to twice the difference between the power at P6 and the power at P7. Between P8 and P9, the third PSU takes on the remaining load (e.g. the total system load minus twice the efficiency power), which increases one on one with the total system load.

The skilled person will appreciate that this second operational range shows two repetitive arrangements of first equally increasing load for currently active PSUs, and secondly activating a further PSU, setting previously active PSUs to operate at the efficiency power and using the newly activated PSU to provide the remaining power. In this embodiment, there are two since after the first PSU, only two more can be activated before all PSUs are active.

A third operational range R3 runs from P9 to P10, which corresponds to three times the efficiency power plus a threshold th_2_3, e.g. a second threshold associated with three PSUs.

Between P9 and P10, the loads taken on by the first, second and third PSUs, so three PSUs in total, each increase with one third of the total system load. In this range, the total system load is equally distributed over three PSUs, and the three PSUs take on identical loads.

A fourth operational range R4 runs from P10 to the maximum total system load. Due to lower PSU efficiency at higher PSU loads, as can be seen in the efficiency curve of figure 1 (not as low an efficiency as for low PSU loads, but still less than the maximum efficiency), it may be advantageous for high total system loads (e.g. above three times the efficiency power) to increase the load taken on by one of the PSUs to its maximum load, and setting other PSUs to take on loads closer to the efficiency power. This is done in this fourth operational range.

Between P10 and P11/P12, the first PSU takes on its maximum load (in this case, 30 kw), and the second and third PSU take on a reference power associated with two PSUs. Between P11 and point P14, the load taken on by the first PSU remains constant. Between P12 and P13, the load taken on by the second and third PSU increases with half the total system load.

Between P13 and P14/P15, the second PSU takes on its maximum load (in this case, 30 kw), and the third PSU takes on a reference power associated with one PSU. Between point P14 and P16, the load taken on by the first and the second PSU remains constant.

Between point P15 and P16, the load taken on by the third PSU increases one on one with the total system load. At point P16, the third PSU takes on its maximum load.

The skilled person will appreciate that this operational range shows three steps since there are three PSUs which ultimately have to be set to their maximum load.

In this embodiment, the PSUs are activated in the order first, second and third, and also take on their maximum load in this order. The order in which the PSUs are activated does not have to be the same as the order in which PSUs take on their maximum load.

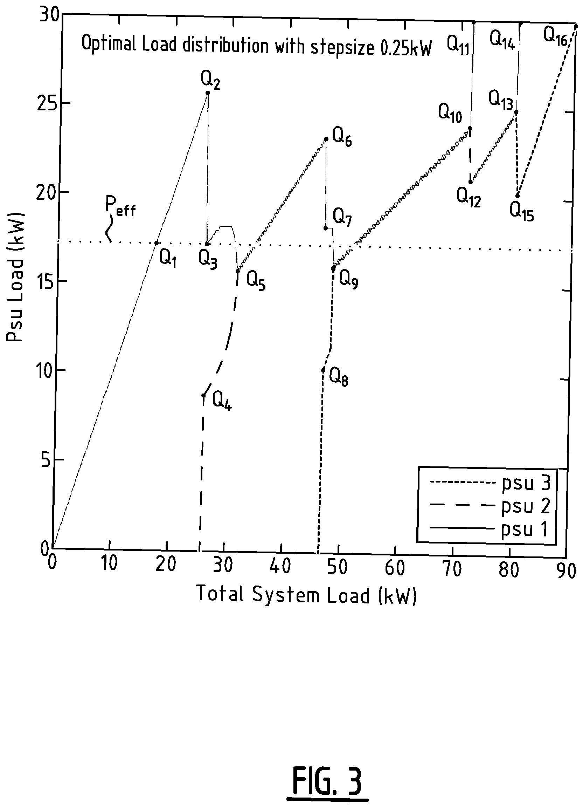

In figure 3, a power distributions are shown, for the complete range of a power delivery system and for each of three power supply units included therein, that represent a theoretical optimal power distribution. These power distributions where derived by calculating all possible power distributions for the three power supply units (e.g. by applying a brute-force approach to the solution space of the power distributions) and selecting that power distribution for which the system delivers power most efficiently.

The skilled person will appreciate that these optimal power levels are followed very closely by the power distributions shown in figure 2, which are themselves based on the power delivery profile according to the present disclosure.

For each point enumerated P1-P16 in figure 2 there is a corresponding point Q1-Q16 which does not necessarily correspond exactly to the points P1-P16 but conceptually show that the power delivery profile according to the present disclosure is indeed very similar.

The skilled person will appreciate that the values for any one of the parameters mentioned above such as th_1_1, th_1_2, th_2_3, th_2_2, th 2_1, and the reference powers related to one or two PSU's can at least partially be based on at least one of the points Q1-Q16 shown in figure 3. There are, however, also other ways in which the skilled person could determine appropriate values for these parameters.

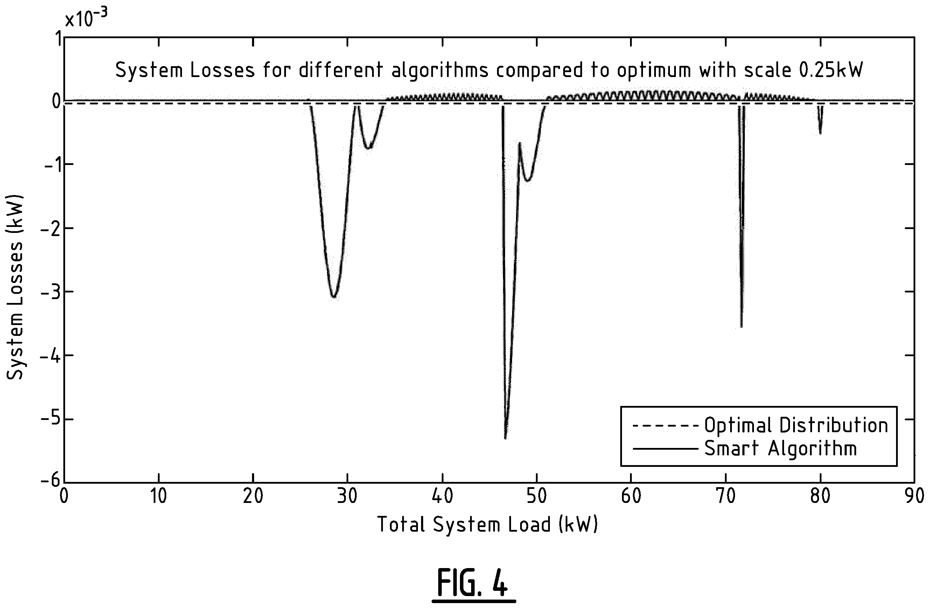

In figure 4, the relative difference between the effective power supplied by the power delivery system according to the present disclosure behaving as shown in figure 2 and the effective power supplied by the theoretical optimal system behaving as shown in figure 3, with respect to the effective power supplied by the theoretical optimal system behaving as shown in figure 3.

The algorithm referred to by the title of the graph in figure 4, and the smart algorithm referred to by the legend in figure 4, may both refer to implementations of the power delivery profile according to the present disclosure.

While figure 4 suggests that the implementation of the power delivery profile (e.g. smart algorithm) achieves result above the optimum, the skilled person will appreciate that this is not possible and understands that this is the result of granular noise introduced to rounding errors in the calculations run by the Applicant. The levels of noise are proportionally small with respect to the differences shown, which therefore should be understood as still relevant.

In the above, the present invention has been explained using detailed embodiments thereof. However, it should be apparent to the skilled person that various modifications are possible to these embodiments without deviating from the scope of the present invention, which is defined by the appended claims and their equivalents.

## Claims

1. A power delivery system for delivering power to a load, comprising:
a power delivery station comprising:
a plurality of power supply units, PSUs, and
a controller for controlling the plurality of PSUs;
a determining unit for determining a power distribution over the plurality of PSUs in dependence of a desired combined power to be outputted by the PSUs to the load,
wherein the power distribution describes how the power outputted by the power delivery station is to be distributed over the plurality of PSUs, and wherein the determining unit is configured to determine said power distribution based on a power delivery profile that describes how many PSUs of a given type of PSU should output what amount of power, in dependence of the combined power outputted by the PSUs;
wherein the power delivery profile shows, as a function of the combined power, a plurality of operational ranges, and wherein, in each operational range, the combined power outputted by the PSUs is distributed over the plurality of PSUs according to one or more modes associated with that operational range,
wherein the power delivery profile further shows, as a function of the combined power, at least one of:
- for a combined power lying in the range from an efficiency power, being the power outputted by a single PSU when it operates at maximum efficiency, to M times the efficiency power, wherein M is the total number of PSUs included in the plurality of PSUs, a first operational range that comprises a repetitive arrangement of, for M>=N>=2:
for a combined power lying in the range from (N-1) times the efficiency power to (N-1) times the efficiency power plus a first threshold associated with (N-1) PSUs, a first mode at which (N-1) PSUs are outputting identical powers; and
for a combined power lying in the range from (N-1) times the efficiency power plus the threshold associated with (N-1) PSUs to N times the efficiency power, a second mode at which (N-1) PSUs are outputting the efficiency power and a single PSU is outputting power equal to the combined power minus (N-1) times the efficiency power.
- for a combined power lying in the range from M times the efficiency power plus the second threshold associated with M PSUs to M times the maximum power, a second operational range that comprises a repetitive arrangement of, for 1<=N<M-1:
for a combined power lying in the range from N times the maximum power plus (M-N) times a first reference power associated with M-N PSUs to N times the maximum power plus (M-N) times a second reference power associated with M-N PSUs, a third mode at which N PSUs are outputting the maximum power and (M-N) PSUs are outputting identical powers;
wherein the controller is configured to control the PSUs based on the determined power distribution.

2. The power delivery system according to claim 1, wherein PSUs of different types differ in their efficiency curve and/or the maximum output power they can deliver.

3. The power delivery system according to claim 1, wherein the PSUs are substantially identical; and
wherein the PSUs preferably have substantially the same efficiency curve and substantially the same maximum output power.

4. The power delivery system according to claim 1, wherein the power delivery profile further shows, as a function of the combined power, at least one of:
for a combined power lying in the range from 0 to an efficiency power, a third operational range in which a single PSU outputs the combined power;
for a combined power lying in the range from M times the efficiency power to M times the efficiency power plus a second threshold associated with M PSUs, a fourth operational range in which M PSUs are outputting identical powers.

5. The power delivery system according to claim 3, wherein the power delivery profile describes which PSU should output what amount of power in dependence of the combined power outputted by the PSUs.

6. The power delivery system according to any of the previous claims, further comprising a temperature measuring unit configured to measure a temperature of each PSU of the plurality of PSUs;
wherein the determining unit is preferably configured to select, prior to the power delivery station outputting the desired power to the load, among those PSUs of the plurality of PSUs that are of the same type and that are inactive, one or more PSUs for outputting power based on the temperature of those PSUs being lower than that of the remaining PSUs of that same type that are inactive.

7. The power delivery system according to claim 6, wherein the determining unit is configured to determine the power distribution such that among the PSUs that are of the same type, the PSU having the highest temperature is selected for outputting the lowest output power and/or the PSU having the lowest temperature is selected for outputting the highest output power.

8. The power delivery system according to any of the previous claims, wherein the determining unit is either incorporated in the power delivery station or a server remote from the power delivery station, in which case the server and power delivery station are configured to be communicatively coupled for exchanging the determined power distribution.

9. The power delivery system according to any of the previous claims, further comprising at least one of:
- a communication unit for receiving a value of the desired power, and for communicating said received value to the determining unit, wherein the communication unit is preferably incorporated in the power delivery station or
- an output unit, for example a plug or a socket, wherein the power delivery system is configured to deliver the desired power to the load via the output unit, wherein the power delivery system is preferably a charging system configured to charge, through the output unit, one or more batteries, for example as included in an electronic vehicle, such as an electric car.

10. The power delivery system according to any of the previous claims, wherein the determining unit comprises a processing unit and a memory operatively coupled to the processing unit, wherein the memory stores instructions and/or values that implement the power delivery profile.

11. The power delivery system according to claim 10, wherein the memory stores either:
- a lookup table that lists, for each PSU type, how many PSUs of that type should output what amount of power, as a function of the combined power to be outputted by the PSUs to the load; or
in so far the power delivery system is according to claim 3, a lookup table that lists which PSUs should output what amount of power, as a function of the combined power to be outputted by the PSUs to the load.

12. The power delivery system according to claim 10, wherein the processing unit is configured to determine for each PSU type, how many PSUs of that type should output what amount of power, as a function of the combined power to be outputted by the PSUs to the load by executing the instructions stored in the memory.

13. A method for delivering power to a load using a plurality of power supply units, PSUs, comprising:
determining a power distribution over the plurality of PSUs in dependence of a desired power to be outputted by the power delivery station to the load, wherein the power distribution describes how the power outputted by the power delivery station is to be distributed over the plurality of PSUs, wherein said determining a power distribution comprises determining said power distribution based on a power delivery profile that describes how many PSUs of a given type of PSU should output what amount of power in dependence of the combined power outputted by the PSUs;
wherein the power delivery profile shows, as a function of the combined power, a plurality of operational ranges, and wherein, in each operational range, the combined power outputted by the PSUs is distributed over the plurality of PSUs according to one or more modes associated with that operational range, wherein the plurality of operational ranges comprises at least one of:
- a first operational range, for a combined power lying in the range from an efficiency power, being the power outputted by a single PSU when it operates at maximum efficiency, to M times the efficiency power, wherein M is the total number of PSUs included in the plurality of PSUs, that comprises a repetitive arrangement of, for M>=N>=2:
for a combined power lying in the range from (N-1) times the efficiency power to (N-1) times the efficiency power plus a first threshold associated with (N-1) PSUs, a first mode at which (N-1) PSUs are outputting identical powers; and
for a combined power lying in the range from (N-1) times the efficiency power plus the threshold associated with (N-1) PSUs to N times the efficiency power, a second mode at which (N-1) PSUs are outputting the efficiency power and a single PSU is outputting power equal to the combined power minus (N-1) times the efficiency power.
- a second operational range, for a combined power lying in the range from M times the efficiency power plus the second threshold associated with M PSUs to M times the maximum power, that comprises a repetitive arrangement of, for 1<=N<M-1:
for a combined power lying in the range from N times the maximum power plus (M-N) times a first reference power associated with M-N PSUs to N times the maximum power plus (M-N) times a second reference power associated with M-N PSUs, a third mode at which N PSUs are outputting the maximum power and (M-N) PSUs are outputting identical powers;
controlling the PSUs based on the determined power distribution.

14. The method according to claim 13, wherein the power delivery profile further shows as a function of the combined power, at least one of:
for a combined power lying in the range from 0 to an efficiency power, a third operational range in which a single PSU outputs the combined power;
for a combined power lying in the range from M times the efficiency power to M times the efficiency power plus a second threshold associated with M PSUs, a fourth operational range in which M PSUs are outputting identical powers.

15. The method according to claim 13 or 14, wherein the PSUs have substantially the same efficiency curve and/or the same maximum power delivery capacity.
